# EUROPÄISCHE PATENTANMELDUNG

(11) **EP 4 300 219 A1**
(43) Veröffentlichungstag der Anmeldung: **03.01.2024**
(21) Anmeldenummer: 22182081.4
(22) Anmeldetag: 30.06.2022
(51) Int. Cl.: G05B 17/02, G05B 19/418

(54) **VERFAHREN ZUR ERMITTLUNG EINER REGLERKONFIGURATION FÜR EIN ANTRIEBSSYSTEM, COMPUTERPROGRAMM, COMPUTERLESBARES MEDIUM, VORRICHTUNG UND ANTRIEBSSYSTEM**

(71) Anmelder: Siemens Aktiengesellschaft, 80333 München (DE)
(72) Erfinder: Dirsch, Bernhard, 91056 Erlangen (DE); Flender, Jerome, 96114 Hirschaid (DE); Linke, Hartmut, 91056 Erlangen (DE); Lomakin, Alexander, 90455 Nürnberg (DE); Weichselsdorfer, Markus, 22529 Hamburg (DE); Zimmermann, Roland, 91052 Erlangen (DE)
(74) Vertreter: Siemens Patent Attorneys

(57) **Zusammenfassung**

Verfahren zur Ermittlung einer Reglerkonfiguration für ein Antriebssystem, Computerprogramm, computerlesbares Medium, Vorrichtung und Antriebssystem.

Die Erfindung betrifft ein Verfahren zur Ermittlung einer Reglerkonfiguration (10) für ein Antriebssystem (1) mit einem Antrieb (2) unter Nutzung wenigstens eines Simulationsmodells (7), bei dem
S1) eines oder mehrere Streckenmesseergebnisse (6) empfangen werden, wobei das oder das jeweilige Streckenmessergebnis (6) durch Messung einer Drehzahlregelstrecke (3) des Antriebssystems (1) erhalten wird oder wurde,
S2) ein Simulationsmodell (7) mit einem Antriebsteilmodell (8) und mit einem oder mehreren Streckenteilmodellen (9) für die oder die jeweilige Drehzahlregelstrecke (3) erstellt wird, wobei zum Erhalt des oder des jeweiligen Streckenteilmodells (9) eine Systemidentifikation unter Verwendung des oder des jeweiligen Streckenmessergebnisses (6) durchgeführt wird, und
S3) unter Nutzung des Simulationsmodells (7) eine Reglerkonfiguration (10) für das Antriebssystem (1) ermittelt wird.

Des Weiteren betrifft die Erfindung ein Computerprogramm, ein computerlesbares Medium, eine Vorrichtung zur Datenverarbeitung und Antriebssystem (1).

## Beschreibung

Verfahren zur Ermittlung einer Reglerkonfiguration für ein Antriebssystem, Computerprogramm, computerlesbares Medium, Vorrichtung und Antriebssystem.

Die Erfindung betrifft ein Verfahren zur Ermittlung einer Reglerkonfiguration für ein Antriebssystem. Des Weiteren betrifft die Erfindung ein Computerprogramm, ein computerlesbares Medium, eine Vorrichtung zur Datenverarbeitung und ein Antriebssystem.

Komplexe Antriebssysteme, wie beispielsweise Druckmaschinen, erfordern für den passenden Betrieb eine spezifische Reglereinstellung wegen des zugrundeliegenden mechanischen Streckenverhaltens. Aufgrund der enormen Variabilität von Antriebssträngen, ist dabei oft ein Spezialist notwendig, um die Antriebe zu parametrieren und zu optimieren. Dabei ist aufgrund der Variabilität je nach Komplexität des zugrundeliegenden Systems die Parametrierung und Inbetriebnahme selbst für Spezialisten sehr aufwändig.

Die bereits existierenden Regler-Optimierungsalgorithmen reichen dabei oft nicht aus, um diese Variabilität voll umfänglich abzudecken, weshalb ein Spezialist die Analyse und Optimierung durchführen muss.

Zudem erfordert eine manuelle Optimierung permanente Maschinenzugänglichkeit, da es sich hierbei um einen iterativen Prozess handelt, bei dem gewählte Einstellungen immer wieder durch Messungen kontrolliert werden. Diese Wartezeiten und Anpassungen an der Maschine haben Betriebsausfallzeiten für den Endkunden zur Folge, da in dieser Zeit nicht produziert werden kann.

Da sich im System auch Veränderungen ergeben, besteht häufig eine Problemstellung darin, dass das Streckenverhalten fortlaufend während des Betriebs überwacht werden muss und die aktuelle Reglerkonfiguration gegebenenfalls daran angepasst werden soll. Eine reine Optimierung zur Inbetriebnahme ist somit für viele Situationen und Applikationen unzureichend und erfordert mehr Aufwand.

Eine besondere Herausforderung besteht weiterhin bei der Findung einer gemeinsamen passenden Reglereinstellung für gleichartige Antriebssysteme. Beispielsweise können sich laufzeit- bzw. alterungs- oder auch umrüstbedingt verschiedene Lastkonfigurationen ergeben. Die Reglereinstellungen müssen dann jeweils erneut von einem Spezialisten überprüft und gegebenenfalls angepasst werden, was zeitaufwendig ist. Es wäre wünschenswert, übergreifend für mehrere Antriebssysteme eine passende Reglereinstellung bestimmen zu können, die nicht kontinuierlich bei Veränderungen, insbesondere an den Einzelachsen, angepasst werden muss. Es mag unter Nutzung von Expertenwissen mitunter gelingen, auch eine für verschiedene Lastkonfigurationen geeignete Reglereinstellung aufzufinden. Die erforderliche Validierung der Einstellung ist dann jedoch sehr aufwendig, da für alle Lastkonfigurationen getestet werden muss.

Systemveränderungen sind dabei in vielen Applikationen auch mehrmals am Tag möglich. Abhängig vom gefertigten Produkt können sich die Lastträgheit oder weitere Systemparameter (Steifigkeit, Dämpfung) ändern, was wiederum eine Herausforderung an die bestehende Regelung darstellt. Die Komplexität wird dabei maßgeblich erhöht und es fehlt an spezifischen Leitregeln zur Reglerkonfiguration, weshalb der Inbetriebnehmer einzig auf seiner Erfahrung und Intuition aufbauen kann.

Bisherige Lösungsansätze nehmen oftmals nur Teilprobleme bei der Inbetriebnahme ab und benötigen weiterhin Expertenknowhow.

Der Anmelderin ist ein Verfahren bekannt, bei dem mit einem automatischen Regleroptimierungs-Algorithmus eine Maschine analysiert wird, indem die Drehzahlregelstrecke vermessen und anhand dessen die Reglereinstellungen optimiert und direkt im Antrieb übernommen werden. Hierbei ist eine Verbindung zur realen Maschine erforderlich, was zu Stillstands- und somit Ausfallzeiten führt.

Es ist auch bekannt, Simulationen für eine Regleroptimierung zu nutzen. Dabei wird ein Modell der entsprechenden Maschine erstellt, was voraussetzt, dass die wesentlichen mechanischen Eigenschaften und Parameter bekannt sind. Hier wird auf Expertenwissen zurückgegriffen.

Die EP 3 518 051 A1 offenbart ein Ermittlungsverfahren für eine Strategie zur Optimierung des Betriebes einer Bearbeitungsmaschine. Dabei wird keine Optimierung als solche durchgeführt. Diese obliegt nach wie vor einem Benutzer. Diesem werden jedoch die Informationen an die Hand gegeben, welche Parameter zur Optimierung des Betriebs der Maschine überhaupt variiert werden müssen und worauf der Benutzer im Rahmen der Optimierung achten muss.

In der EP 3 451 100 A1 ist ein Betriebsverfahren für eine Maschine beschrieben. Dieses umfasst einen Normal- und einen Sonderbetrieb. In Letzterem erfasst eine Steuereinrichtung der Maschine sich durch Sollwerte ergebende Istwerte und ermittelt anhand der Abfolge von im Sonderbetrieb vorgegebenen Sollwerten und zugehörigen erfassten Istwerten eine Frequenzkennlinie eines Aktors. Anhand der Frequenzkennlinie und Parameter der Reglerstruktur ermittelt die Steuereinrichtung eine Bewertung für den Aktor und/oder die Reglerstruktur und entscheidet in Abhängigkeit von der Bewertung, ob und gegebenenfalls welche Meldung sie an einen Bediener der Maschine oder über ein Rechnernetz an eine Recheneinrichtung übermittelt. Das Verfahren ermöglicht auf einfache und zuverlässige Weise die frühzeitige Erkennung problematischer Maschinenzustände.

Aus der EP 2 690 513 B1 geht ein Verfahren zum Condition-Monitoring einer programmgesteuerten Maschine hervor. Dieses umfasst das Bereitstellen eines dynamischen Modells der Maschine oder eines Teils dieser, wobei das dynamische Modell Modell-Parameter wie Massenträgheiten, Federsteifigkeiten oder Dämpfungswerte umfasst, und das Durchführen einer Frequenzanalyse für die Maschine bzw. deren Teil. Anhand der Frequenzanalyse wird wenigstens ein neuer Wert für wenigstens einen Modell-Parameter bestimmt und der neue Wert mit dem ursprünglichen verglichen. Anhand des Vergleichsergebnisses wird ein Zustand der Maschine erkannt.

Ausgehend von dem Stand der Technik besteht eine Aufgabe der vorliegenden Erfindung darin, ein Verfahren zur Ermittlung einer Reglerkonfiguration anzugeben, dass sich vergleichsweise einfach durchführen lässt, mit möglichst wenig Expertenwissen auskommt, den regulären Betrieb des Antriebssystems wenig beeinflusst, und eine Regleroptimierung selbst für den Fall verschiedener Lastkonfigurationen ermöglicht.

Diese Aufgabe wird gelöst durch ein Verfahren zur Ermittlung einer Reglerkonfiguration für ein Antriebssystem mit einem Antrieb unter Nutzung wenigstens eines Simulationsmodells, bei dem
S1) eines oder mehrere Streckenmesseergebnisse empfangen werden, wobei das oder das jeweilige Streckenmessergebnis durch Messung einer Drehzahlregelstrecke des Antriebssystems erhalten wird oder wurde, bevorzugt, wobei das oder das jeweilige Streckenmessergebnis durch wenigstens einen messtechnisch erfassten Frequenzgang der oder der jeweiligen Drehzahlregelstrecke gegeben ist oder einen solchen umfasst,
S2) ein Simulationsmodell mit einem Antriebsteilmodell und mit einem oder mehreren Streckenteilmodellen für die oder die jeweilige Drehzahlregelstrecke erstellt wird, wobei zum Erhalt des oder des jeweiligen Streckenteilmodells eine Systemidentifikation unter Verwendung des oder des jeweiligen Streckenmessergebnisses durchgeführt wird, und
S3) unter Nutzung des Simulationsmodells eine Reglerkonfiguration für das Antriebssystem ermittelt wird.

Das erfindungsgemäße Verfahren ermöglicht mit anderen Worten eine definierte Regleroptimierung eines Antriebssystems unter Berücksichtigung von Messungen und Einstellkriterien einzig auf Basis wenigstens einer spezifischen realen Messung am Antriebssystem. Es wird ein digitales Abbild von Antrieb und der Drehzahlregelstrecke(n) als dynamisches Simulationsmodell erstellt und verwendet. Mit diesem kann dann eine optimierte Reglerkonfiguration bestimmt werden. Das erfindungsgemäß zum Einsatz kommende Simulationsmodell umfasst dabei ein Antriebsteilmodell und eines oder mehrere Streckenteilmodelle. Das bzw. - im Falle mehrerer Streckenmesseergebnisse - die Streckenteilmodelle bilden die Mechanik und das mechanische Verhalten ab. Erfindungsgemäß wird das Streckenteilmodell bzw. werden die Streckenteilmodelle auf Basis einer generischen Systemidentifikation ermittelt. Grundlage hierfür bildet die reale Messung bzw. bilden die realen Messungen der Drehzahlregelstrecke(n). In Kombination mit dem digitalen Abbild des Antriebs resultiert ein dynamisches Modell, welches optimale Grundlage für eine weitere Auslegung der Regelparameter bieten kann. Aufgrund des detaillierten hinterlegten Simulationsmodells können hochpräzise Simulationen erstellt und somit eine sichere Optimierung der Reglerkonfiguration ermöglicht werden. In Schritt S3 können auf Basis der ermittelten mathematischen Modelle die Reglerparameter hinsichtlich der vom Anwender bestimmten Kriterien optimiert werden und anschließend unter Nutzung des Simulationsmodells insbesondere unter Verwendung diskreter Regelkreise simuliert und verifiziert werden, was eine bevorzugte Vorgehensweise darstellt. Beispiele für mögliche Kriterien wären Amplitudenüberhöhungen sowie Amplituden- und Phasenreserve.

Das erfindungsgemäße Verfahren bietet neben einer im Vergleich zu konventionellen Verfahren höheren Genauigkeit noch weitere Vorteile. Stillstandszeiten zur Inbetriebnahme einer realen Maschine können signifikant reduziert werden, da eine virtuelle Auslegung und Simulation der identifizierten Strecke(n) auf Basis eines verifizierten Simulationsmodells möglich ist. Reglereinstellungen können am (jeweiligen) identischen, virtuellen Streckenteilmodell erprobt werden, ohne in den Betrieb eingreifen zu müssen. Ein Zugriff auf das reale Antriebssystem für die Durchführung des erfindungsgemäßen Verfahrens ist nicht erforderlich. Es muss nur die wenigstens eine reale Messung der Drehzahlregelstrecke(n) zum Erhalt des (jeweiligen) Streckenmessergebnisses durchgeführt werden, was auch zuvor geschehen kann. Das erfindungsgemäße Verfahren kann praktisch zu beliebiger Zeit und vom regulären Betrieb des Antriebssystems unabhängig durchgeführt werden. Es kann auch ganz ohne Zugang zu dem bzw. Zugriff auf das Antriebssystem absolviert werden.

Insbesondere für den Fall, dass das erfindungsgemäße Verfahren in eine Edge-Umgebung integriert wird, kann auch eine fortlaufende, bevorzugt kontinuierliche Optimierung der Reglerkonfiguration erfolgen. Ein Anwender wird dazu befähigt, eine Optimierung ohne Expertenwissen selbständig vorzunehmen. Es kann auch während des regulären Betriebs des Antriebssystems eine Überprüfung der aktuellen Reglerkonfiguration vorgenommen werden und eine Anpassung an gegebene Veränderungen im System erfolgen, wobei hierfür in regelmäßigen oder vom Anwender spezifisch vorgegebenen Abständen neue Messungen der (jeweiligen) Drehzahlregelstrecke erfolgen können. Entsprechende Messphasen können in der jeweiligen Betriebsphase berücksichtigt bzw. ergänzt werden.

Das erfindungsgemäße Verfahren ist auch sehr universal einsetzbar. Es besteht keinerlei Beschränkung/Fokussierung auf bestimmte Maschinentypen.

Es ist ferner erstmalig eine Kombination mehrerer Modelle und Messungen für eine Reglereinstellung mit beispielsweise veränderten Werkzeugen und/oder weiteren veränderten Systemparametern möglich. Das erfindungsgemäße Verfahren hat sich entsprechend auch als besonders geeignet erwiesen, um eine optimierte gemeinsame Reglerkonfiguration für verschiedene Lastkonfigurationen, die sich beispielsweise aufgrund von Umrüstprozessen ergeben können, zu ermitteln. In vorteilhafter Weiterbildung des Verfahrens ist daher vorgesehen, dass in Schritt S1 mehrere zu verschiedenen Drehzahlregelstrecken gehörige Streckenmessergebnisse empfangen werden, und in Schritt S2 ein Simulationsmodell mit jeweils einem Streckenteilmodell für jede der Drehzahlregelstrecken erstellt wird, und in Schritt S3 eine gemeinsame, für alle Drehzahlregelstrecken geeignete Reglerkonfiguration unter Nutzung des die mehreren Streckenteilmodelle umfassenden Simulationsmodells ermittelt wird.

Das bzw. die Streckenmessergebnisse können beispielsweise von einem Engineering-System bzw. einer Engineering-Plattform bereitgestellt bzw. empfangen werden. Es ist auch möglich, dass die Messung(en) der oder der jeweiligen Drehzahlregelstrecke zum Erhalt des oder des jeweiligen Streckenmessergebnisses mit einem Engineering-System bzw. einer Engineering-Plattform durchgeführt werden.

Dabei werden bevorzugt die Frequenzkennlinien aller einzelnen Drehzahlregelstrecken überlagert, um eine Hüllkurve zu bestimmen und auf Basis dieser eine stabile Reglerkonfiguration als gemeinsame Reglerkonfiguration für alle Systeme zu bestimmen.

Die verschiedenen Drehzahlregelstrecken, für die die mehreren Streckenmessergebnisse bereitgestellt werden, können, sind unterschiedlich ausgestaltet. Sie können sich insbesondere hinsichtlich wenigstens einer Komponente unterscheiden. Es kann beispielsweise sein, dass mit umrüstbedingten Modifikationen des realen Antriebssystems zu rechnen ist. Rein beispielhaft sei genannt, dass eine Druckmaschine mit verschiedenen, insbesondere verschieden großen Walzen betrieben werden soll. Dann kann mit dem erfindungsgemäßen Verfahren eine optimierte, gemeinsame Reglerkonfiguration gefunden werden, die für alle Walzen(größen) geeignet ist. Der Aufwand, der mit dem Finden einer übergreifenden Reglerkonfiguration verbunden ist, ist dabei vergleichsweise gering. Eine aufwendige Neuparametrierung der Regelung in einem Umrüstfall kann ferner entfallen.

Eine weitere zweckmäßige Ausführungsform zeichnet sich dadurch aus, dass das oder das jeweilige Streckenmesseergebnis durch Messung der oder der jeweiligen Drehzahlregelstrecke nach einer definierten Anregung, insbesondere nach einer definierten Rauschanregung, bevorzugt nach einer Pseudozufallsrauschanregung, erhalten wird oder wurde. Dies hat sich als besonders geeignet erweisen.

Alternativ oder zusätzlich kann vorgesehen sein, dass für die Systemidentifikation eine Anzahl von Pol- und Nullstellen für das oder das jeweilige Streckenmessergebnis definiert wird, und/oder dass eine Anzahl von Pol- und Nullstellen in dem oder dem jeweiligen Streckenmessergebnis ermittelt wird. Dies kann z.B. durch einen Benutzer oder automatisiert erfolgen.

Die Systemidentifikation für das oder das jeweilige Streckenteilmodell kann ferner die Bereitstellung eines Streckenteilmodells mit unbekannten Modellparametern und die Ermittlung der Modellparameter unter Verwendung des oder des jeweiligen Streckenmessergebnisses umfassen, bevorzugt über eine mathematische Annäherung an die gemessene Kurve. Es kann ein mathematisches Optimierungsverfahren zur Annäherung der Modellcharakteristik zum Einsatz kommen, so dass es dem oder dem jeweiligen Streckenmessergebnis, insbesondere gemäß einem vom Anwender definierten Gütekriterium, entspricht. Rein beispielhaft sei ein Streckenteilmodell für einen Mehr-, insbesondere Zweimassenschwinger, mit den unbekannten, zu optimierenden Parametern der Trägheiten, Steifigkeit und Dämpfung genannt. Die Optimierung kann über einen numerischen Optimierungsalgorithmus erfolgen, der die Abweichung zwischen dem (jeweiligen) Streckenmessergebnis, insbesondere der (jeweiligen) gemessenen Frequenzkennlinie, und der durch die Parameter einzustellenden Kennlinie minimiert (z.B. ein Nelder Mead Algorithmus).

Die Systemidentifikation für das oder das jeweilige Streckenteilmodell kann auch die iterative Anpassung der Modellparameter insbesondere bis zum Erhalt eines erwünschten Ergebnisses umfassen, welche bis zur Erfüllung der vom Anwender definierten Gütekriterien oder der Erreichung der einstellbaren maximalen Anzahl an Iterationen ausgeführt wird.

In weiterer Ausgestaltung der Erfindung wird das Antriebsteilmodell, insbesondere als Abbild der Regelung und Steuerung des Umrichters unter Nutzung bekannter Antriebsparameter, bevorzugt unter Nutzung bekannter Motorparameter eines Motors des Antriebs erstellt. Beispielsweise können entsprechende Informationen von einem Engineering-System bzw. einer Engineering-Plattform bereitgestellt bzw. abgefragt bzw. empfangen werden. Das Antriebsteilmodell bildet bevorzugt das für die Steuerung und Regelung notwendige Verhalten des Umrichters nach, sodass die Drehmomentwerte zu den Geschwindigkeiten passen. Die Umsetzung des Antriebsteilmodells und dessen Parametrierung erfolgt zweckmäßiger Weise in identischer Umsetzung wie der reale Antrieb. Dabei werden bevorzugt auch die Zeitcharakteristik der Reglerkaskade und aller auftretenden Filter in analoger Weise zum realen Modell nachimplementiert.

Die in Schritt S3 ermittelte Reglerkonfiguration kann in an sich bekannter Weise Regler-Parameter und Stromsollwert-Filter für das Antriebssystem, insbesondere den Antrieb, umfassen.

Zweckmäßiger Weise wird die Reglerkonfiguration an das reale Antriebssystem übergeben und dieses entsprechend geregelt. Sie kann auch in ein Engineering-System bzw. in eine Engineering-Plattform übernommen werden.

Ein weiterer Gegenstand der vorliegenden Erfindung ist ein Computerprogramm, das Programmcodemittel umfasst, die, wenn sie auf wenigstens einem Computer ausgeführt werden, den wenigstens einen Computer veranlassen, die Schritte des erfindungsgemäßen Verfahrens durchzuführen.

Die Erfindung betrifft auch ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Die Erfindung betrifft ferner eine Vorrichtung zur Datenverarbeitung, umfassend
- einen Prozessor, und
- eine Datenspeichervorrichtung, auf der computerausführbarer Programmcode gespeichert ist, der, wenn er von dem Prozessor ausgeführt wird, diesen veranlasst, die Schritte des erfindungsgemäßen Verfahrens durchzuführen.

Die Vorrichtung ist in vorteilhafter Weiterbildung als Edge-Gerät ausgebildet.

Schließlicht ist Gegenstand der Erfindung ein Antriebssystem, das zur Durchführung des erfindungsgemäßen Verfahrens ausgebildet und eingerichtet ist. Das Antriebssystem umfasst eine erfindungsgemäße Vorrichtung zur Datenverarbeitung.

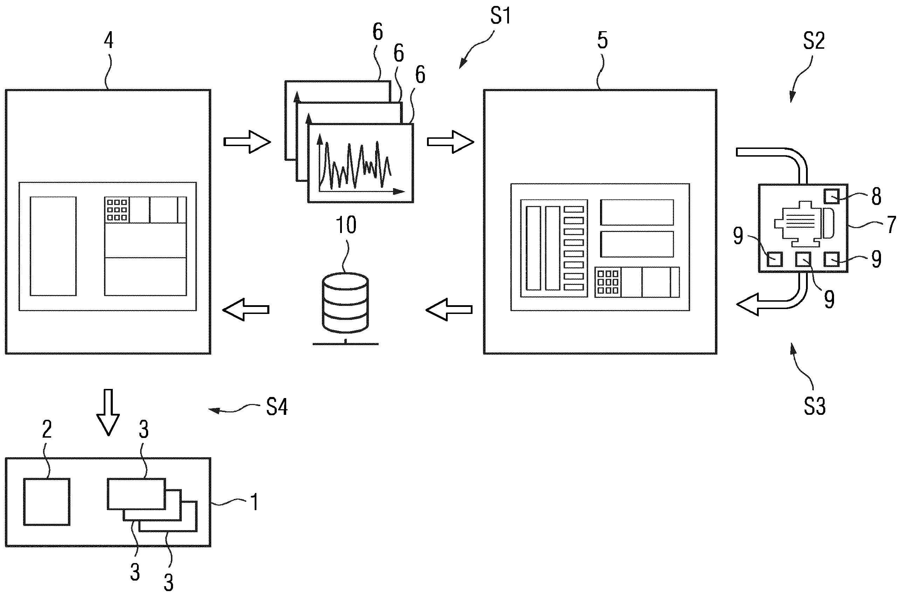

Weitere Merkmale und Vorteile der vorliegenden Erfindung werden anhand der nachfolgenden Beschreibung einer erfindungsgemäßen Ausführungsform unter Bezugnahme auf die beiliegende Zeichnung deutlich. Darin ist
Figur 1 eine rein schematische Darstellung der Schritte eines Ausführungsbeispiels des erfindungsgemäßen Verfahrens

Die Figur 1 zeigt in rein schematischer Blockdarstellung ein reales Antriebssystem 1 mit einem Antrieb 2. Es sind ferner drei reale Drehzahlregelstrecken 3 des Antriebssystems 1 dargestellt, die sich voneinander unterscheiden, konkret drei verschiedenen Lastkonfigurationen entsprechen. Die erste Drehzahlregelstrecke 3 kann beispielsweise zu einem Ausgangszustand bei Inbetriebnahme korrespondieren und die zwei weiteren jeweils veränderten Konfigurationen infolge von beispielsweise Umrüstmaßnahmen. Rein beispielhaft sei genannt, dass eine das Antriebssystem 1 umfassende Druckmaschine mit drei verschiedene Walzen betrieben wird.

Es sei betont, dass die Anzahl von drei Drehzahlregelstrecken 3 rein beispielhaft zu verstehen ist und auch eine beliebige andere Anzahl gegeben sein könnte, auch nur eine Drehzahlregelstrecke 3.

Die Figur 1 zeigt ferner eine mit dem Antriebssystem 1 verbundene Engineering-Plattform 4 und ein Computerprogramm 5, das Programmcodemittel umfasst, die, wenn sie auf wenigstens einem Computer ausgeführt werden, den wenigstens einen Computer veranlassen, die im Folgenden beschriebenen und in der Figur ebenfalls schematisch dargestellten Verfahrensschritte durchzuführen. Das Antriebssystem 1 kann eine Vorrichtung zur Datenverarbeitung mit einem Prozessor und einer Datenspeichervorrichtung umfassen, auf der entsprechender computerausführbarer Programmcode gespeichert ist, der, wenn er von dem Prozessor ausgeführt wird, diesen veranlasst, die beschriebenen Schritte durchzuführen. Eine solche Vorrichtung kann aber auch separat zu dem Antriebssystem 1 ausgebildet sein. Es kann sich beispielsweise auch um ein Edge-Gerät handeln.

In einem Schritt S1 werden mehrere, hier im Lichte der drei Drehzahlregelstrecken 3 drei Streckenmessergebnisse 6 von dem Computerprogramm 5 empfangen, die jeweils durch Messung von einer der drei Drehzahlregelstrecken 3 des Antriebssystems 1 nach einer definierten Rauschanregung, vorliegend nach einer Pseudozufallsrauschanregung, erhalten wurden. Ein Anwender kann die Streckenmessergebnisse 6 beispielsweise von dem Engineering-Portal 4 importieren. Die Streckenmessergebnisse 6 sind jeweils durch einen messtechnisch erfassten Frequenzgang der jeweiligen Drehzahlregelstrecke 3 gegeben. Vorliegend sind die Frequenzgänge 6 vor Schritt S1 mit der Engineering-Plattform 4 aufgezeichnet worden, die in an sich bekannter Weise eine zugehörige Funktionalität umfasst. Bei dem hier beschriebenen Ausführungsbeispiel wurden die Streckenmessergebnisse 6 darstellenden Frequenzgänge zuvor, mit anderen Worten vor der Durchführung des Verfahrens, aufgezeichnet. Die hier beschriebenen Verfahrensschritte können völlig unabhängig vom Betrieb des Antriebssystems 1 und ohne Zugriff auf dieses durchgeführt werden.

In einem Schritt S2 wird ein Simulationsmodell 7 mit einem Antriebsteilmodell 8 und mit mehreren, hier drei Streckenteilmodellen 9 erstellt. Je ein Streckenteilmodell 9 korrespondiert dabei zu einer der Drehzahlregelstrecken 3. Dabei wird zum Erhalt der Streckenteilmodelle 9 eine generische Systemidentifikation unter Verwendung des jeweiligen Streckenmessergebnisses 6 durchgeführt. Von dem Benutzer wird die Anzahl der Pol- und Nullstellen (Modellkomplexität) definiert, die er für die jeweilige Drehzahlregelstrecke 3 erwartet. Anschließend wird die Systemidentifikation ausgeführt. Dabei wird zunächst für jede Drehzahlregelstrecke 3 jeweils ein Streckenteilmodell mit unbekannten Modellparametern bereitgestellt und es werden unter Verwendung des jeweiligen Streckenmessergebnisses 6 die Modellparameter ermittelt. Hierfür werden die entsprechenden Modellparameter über einen numerischen Optimierungsalgorithmus so lange angepasst, bis die Kurven der Frequenzkennlinien der gemessenen Regelstrecke mit der modellierten möglichst gut übereinstimmen bzw. vom Anwender spezifizierte Gütekriterien erfüllt.

Sobald die Drehzahlregelstrecken 3, mit anderen Worten die mechanischen Systeme und das mechanische Verhalten, identifiziert wurden, werden Motordaten wie Motorart, Polpaarzahl und Motorkonstanten für den Antrieb 2 aus der Engineering-Plattform 4 oder händisch von dem Benutzer übertragen und es wird ein zugehöriges Antriebsteilmodell 8 erstellt, insbesondere als Abbild der Regelung und Steuerung des Umrichters unter Nutzung bekannter Antriebsparameter. Die Umsetzung des Antriebsteilmodells 8 und dessen Parametrierung erfolgt zweckmäßiger Weise in identischer Umsetzung wie der reale Antrieb. Dabei werden bevorzugt auch die Zeitcharakteristik der Reglerkaskade und alle auftretenden Filter in analoger Weise zum realen Modell nachimplementiert.

In einem Schritt S3 werden unter Nutzung des das Antriebsteilmodell 8 und die Streckenteilmodelle 9 umfassenden Simulationsmodells 7 diskrete Regelkreise simuliert und verifiziert und eine geeignete Reglerkonfiguration 10 für das Antriebssystem 1 ermittelt. Es werden zur Validierung durch den Anwender nach der Optimierung die Frequenzkennlinien der offenen und geschlossenen Regelkreise des optimierten Systems dargestellt. Als optimiertes System wird insbesondere das Gesamtsystem aus Antrieb 2 und Strecke(n) 3 nach der Optimierung der Reglerparameter betrachtet. Die optimierten Parameter sind dabei bevorzugt in das Antriebsteilmodell 8 eingeflossen und das optimierte System wurde noch einmal simuliert. Es können Simulationen im Simulationsmodell 7 mit den jeweiligen identifizierten Streckenteilmodellen 9 umgesetzt werden, um das Zeitverhalten des optimierten Systems für unterschiedliche anwendungsnahe Situationen und Anwendungen zu verifizieren. Beispielsweise können Sprunganregungen oder Sollwertverläufe aus der realen Steuerung simuliert werden.

Es wird eine gemittelte, über alle drei Drehzahlregelstrecken 3 stabile Reglerkonfiguration 10 als gemeinsame Reglerkonfiguration 10 generiert. Die gemeinsame Reglerkonfiguration 10 umfasst Filter- und Reglereinstellungen, die alle drei Drehzahlregelstrecken 3 gleichermaßen regeln können und ein optimiertes Systemverhalten bieten. Wenn beispielsweise umrüstbedingt eine andere Drehzahlregelstrecke 3 erhalten wird, ist keine Neuparametrierung erforderlich. Die eine Reglerkonfiguration ist weiterhin geeignet.

Die gemeinsame Reglerkonfiguration 10 kann, wie in Figur 1 mit einem Pfeil dargestellt, in die Engineering-Plattform 4 übernommen werden.

In einem Schritt S4 wird die ermittelte Reglerkonfiguration 10 an das Antriebssystem 1 übergeben und dieses entsprechend geregelt. Im Ergebnis wird eine optimiertes Systemverhalten erzielt und zwar für alle drei Drehzahlregelstrecken 3.

Unter Durchführung des beschriebenen Verfahrens können Stillstandszeiten zur Inbetriebnahme einer realen Maschine signifikant reduziert werden, da eine virtuelle Auslegung und Simulation der identifizierten Strecke(n) auf Basis eines verifizierten Simulationsmodells 7 möglich ist. Es wird eine hohe Genauigkeit erzielt und dies, ohne in den Betrieb eingreifen zu müssen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Ermittlung einer Reglerkonfiguration (10) für ein Antriebssystem (1) mit einem Antrieb (2) unter Nutzung wenigstens eines Simulationsmodells (7), bei dem
S1) eines oder mehrere Streckenmesseergebnisse (6) empfangen werden, wobei das oder das jeweilige Streckenmessergebnis (6) durch Messung einer Drehzahlregelstrecke (3) des Antriebssystems (1) erhalten wird oder wurde, bevorzugt, wobei das oder das jeweilige Streckenmessergebnis (6) durch wenigstens einen messtechnisch erfassten Frequenzgang der oder der jeweiligen Drehzahlregelstrecke (3) gegeben ist oder einen solchen umfasst,
S2) ein Simulationsmodell (7) mit einem Antriebsteilmodell (8) und mit einem oder mehreren Streckenteilmodellen (9) für die oder die jeweilige Drehzahlregelstrecke (3) erstellt wird, wobei zum Erhalt des oder des jeweiligen Streckenteilmodells (9) eine Systemidentifikation unter Verwendung des oder des jeweiligen Streckenmessergebnisses (6) durchgeführt wird, und
S3) unter Nutzung des Simulationsmodells (7) eine Reglerkonfiguration (10) für das Antriebssystem (1) ermittelt wird.

2. Verfahren nach Anspruch 1, **dadurch gekennzeichnet, dass** in Schritt S1 mehrere zu verschiedenen Drehzahlregelstrecken (3) gehörige Streckenmessergebnisse (6) bereitgestellt werden, und in Schritt S2 ein Simulationsmodell (7) mit jeweils einem Streckenteilmodell (9) für jede der Drehzahlregelstrecken (3) erstellt wird, und in Schritt S3 eine gemeinsame, für alle Drehzahlregelstrecken (3) geeignete Reglerkonfiguration (10) ermittelt wird.

3. Verfahren nach Anspruch 2, **dadurch gekennzeichnet, dass** eine gemittelte, über alle Drehzahlregelstrecken (3) stabile Reglerkonfiguration (10) als gemeinsame Reglerkonfiguration (10) ermittelt wird.

4. Verfahren nach Anspruch 2 oder 3, **dadurch gekennzeichnet, dass** die verschiedenen Drehzahlregelstrecken (3) unterschiedlich ausgestaltet sind, sich insbesondere hinsichtlich wenigstens einer Komponente unterscheiden.

5. Verfahren nach einem der vorhergehenden Ansprüche, **dadurch gekennzeichnet , dass** das oder das jeweilige Streckenmesseergebnis (6) durch Messung der oder der jeweiligen Drehzahlregelstrecke (3) nach einer definierten Anregung, insbesondere nach einer definierten Rauschanregung, bevorzugt nach einer Pseudozufallsrauschanregung, erhalten wird oder wurde.

6. Verfahren nach einem der vorhergehenden Ansprüche, **dadurch gekennzeichnet , dass** für die Systemidentifikation eine Anzahl von Pol- und Nullstellen für das oder das jeweilige Streckenmessergebnis (6) definiert wird, und/oder dass eine Anzahl von Pol- und Nullstellen in dem oder dem jeweiligen Streckenmessergebnis (6) ermittelt wird.

7. Verfahren nach einem der vorhergehenden Ansprüche, **dadurch gekennzeichnet , dass** die Systemidentifikation für das oder das jeweilige Streckenteilmodell (9) die Bereitstellung eines Streckenteilmodells mit unbekannten Modellparametern und die Ermittlung der Modellparameter unter Verwendung des oder des jeweiligen Streckenmessergebnisses (6) umfasst, bevorzugt, wobei ein mathematisches Optimierungsverfahren zur Annäherung der Modellcharakteristik zum Einsatz kommt, so dass es dem oder dem jeweiligen Streckenmessergebnis (6), insbesondere gemäß einem vom Anwender definierten Gütekriterium, entspricht.

8. Verfahren nach einem der vorhergehenden Ansprüche, **dadurch gekennzeichnet, dass** die Systemidentifikation für das oder das jeweilige Streckenteilmodell (9) die iterative Anpassung der Modellparameter insbesondere bis zum Erhalt eines erwünschten Ergebnisses umfasst.

9. Verfahren nach einem der vorhergehenden Ansprüche, **dadurch gekennzeichnet, dass** das Antriebsteilmodell (8) unter Nutzung bekannter Antriebsparameter, insbesondere unter Nutzung bekannter Motorparameter eines Motors des Antriebs (2) erstellt wird.

10. Verfahren nach einem der vorhergehenden Ansprüche, **dadurch gekennzeichnet, dass** das Verfahren vom Betrieb des Antriebssystems (1) unabhängig durchgeführt wird, und/oder dass das Verfahren ohne Zugang zu dem Antriebssystem (1) durchgeführt wird.

11. Verfahren nach einem der vorhergehenden Ansprüche, **dadurch gekennzeichnet, dass** in Schritt S3 unter Nutzung des Simulationsmodells (7) diskrete Regelkreise simuliert und verifiziert werden.

12. Verfahren nach einem der vorhergehenden Ansprüche, **dadurch gekennzeichnet, dass** die in Schritt S3 ermittelte Reglerkonfiguration (10) Regler-Parameter und Stromsollwert-Filter für das Antriebssystem (1), insbesondere den Antrieb (2), umfasst, und/oder dass die ermittelte Reglerkonfiguration (10) an das Antriebssystem (1) übergeben und dieses entsprechend geregelt wird.

13. Computerprogramm, umfassend Befehle, die, wenn sie auf wenigstens einem Computer ausgeführt werden, den wenigstens einen Computer veranlassen, die Schritte des Verfahrens nach einem der Ansprüche 1 bis 12 durchzuführen.

14. Computerlesbares Medium, umfassend Befehle, die, wenn sie auf wenigstens einem Computer ausgeführt werden, den wenigstens einen Computer veranlassen, die Schritte des Verfahrens nach einem der Ansprüche 1 bis 12 durchzuführen.

15. Vorrichtung zur Datenverarbeitung, umfassend
- einen Prozessor, und
- eine Datenspeichervorrichtung, auf der computerausführbarer Programmcode gespeichert ist, der, wenn er von dem Prozessor ausgeführt wird, diesen veranlasst, die Schritte des Verfahrens nach einem der Ansprüche 1 bis 12 durchzuführen.

16. Antriebssystem (1) umfassend einen Antrieb und eine Vorrichtung zur Datenverarbeitung nach Anspruch 15.
